# EUROPEAN PATENT SPECIFICATION

(11) **EP 2 647 168 B1**
(45) Date of publication and mention of the grant of the patent: **20.08.2014**
(21) Application number: 10784531.5
(22) Date of filing: 30.11.2010
(51) Int. Cl.: H04L 29/06, H04L 12/28

(54) **RECORDING IN A LOCAL NETWORK**
AUFZEICHNUNG IN EINEM LOKALEN NETZWERK
ENREGISTREMENT DANS UN RÉSEAU LOCAL

(43) Date of publication of application: 09.10.2013
(73) Proprietor: Telefonaktiebolaget L M Ericsson (PUBL), 164 83 Stockholm (SE)
(72) Inventor: WOXBLOM, Mikael, S-125 42 Älvsjö (SE); ERMIS, Olof, 72461 Västeras (SE)
(74) Representative: Egrelius, Fredrik
(86) International application number: PCT/EP2010/068486
(87) International publication number: WO 2012/072107

(56) References cited:
- US-A1- 2009 245 758
- US-A1- 2010 036 907
- GALLEGO I L ET AL: "DLNA-Based IPTV Platform", CONSUMER COMMUNICATIONS AND NETWORKING CONFERENCE, 2009. CCNC 2009. 6TH IEEE, IEEE, PISCATAWAY, NJ, USA, 10 January 2009 (2009-01-10), pages 1-5, XP031425539, ISBN: 978-1-4244-2308-8

## Description

The present invention relates to methods for a media rendering recording device in a local network, and for a media controlling device in a local network, of recording broadcasted/multicasted media content. The invention also relates to a media rendering recording device and to a media controlling device.

### BACKGROUND

A local network, e.g. a home network or an office network, may comprise several connected consumer electronic devices, e.g. personal computers, mobile phones, set-top-boxes and gaming consoles. Electronic devices within a local network may be adapted to communicate with each other e.g. according to DLNA (Digital Living Network Alliance) standard, which allows consumer electronic devices to communicate and share media content with each other within the same DLNA network. Thereby, a TV could access e.g. media files residing on a PC, without any complicated configuration process, if the TV and the PC belong to the same DLNA home network.

A DLNA-compatible device is able to communicate with other DLNA-compatible devices within a DLNA network via a Universal Plug and Play (UPnP), which is a network-protocol that is capable of establishing communication between DLNA-compatible devices within a DLNA network, without any configuration. By means of the UPnP, a DLNA device is able to e.g. discover and address other available DLNA devices within a DLNA network, and receive a description of their capabilities.

The DLNA-compatible devices within a DLNA network are typically of different types, based on their function in the media distribution and rendering, the types comprising a DMS (Digital Media Storage/Server), a DMP (Digital Media Player), a DMR (Digital Media Renderer), and a DMC (Digital Media Controller).

Further, a media aggregating node of an external network, e.g. a so-called Media Fabric, could be connected to a local network, such as e.g. the above-mentioned DLNA network, via a gateway. The media aggregating node handles media content from media providers of the external network, outside the local network, as well as metadata from media content data servers of the external media providers. The media aggregating node is further responsible e.g. for authenticating a user, and for processing requests and presence messages.

A DMS (Digital Media Storage/Server) of the local network may be e.g. a PC (Personal Computer) or a NAS (Network Attached Storage), which is able to store local media content and make it available to a DMP (Digital Media Player) or to a DMR (Digital Media Renderer) of the local network.

As indicated above, the DMC (Digital Media Controller) is able to browse a DMS, and play-out selected media content on a DMR, by sending a link to the media file to the DMR, wherein the DMR will connect to the link and start playing the media content. Thus, a DMR is a device that is able to play-out content received as a link from a DMC, and a DMR may be a TV, an audio/video receiver, a video display or remote speakers, and a DMC may be e.g. a PDA (Personal Digital Assistant) or a mobile phone. Further, a DMP may be e.g. a TV, a stereo, a game console, or a mobile phone, and is also able to browse a DMS in order to display a media playlist, and provide playback and rendering capabilities of user-selected media content.

Thus, in a conventional local network, e.g. a DLNA network, a media controlling device, e.g. a DMC, is able to obtain a list of available media content from a DMS, and send a specific URL included in the playlist to a media rendering device, e.g. a DMR, wherein the media rendering device is able to connect to the specified URL and play the media. Further, a media playing device, e.g. a DMP, is also able to obtain a media playlist from a DMS, and play the media content of a link included in the playlist. However, presently it is not possible to record broadcasted media content within a local network, using conventional local-network devices, e.g. DLNA devices within a DLNA network.

Such subject matter is known from prior art US 2009/245758 A1 or US 2010/036907 A1.

### SUMMARY

It is an object of the present invention to address at least some of the issues outlined above, and this object and others are achieved by the method and the arrangement according to the appended independent claims 1, 5, 8 and 14, and by the embodiments according to the dependent claims.

According to a first aspect, a method is provided for a media rendering recording device in a local network of recording broadcasted/multicasted media content. The recording is initiated by a media controlling device of the local network, and the media rendering recording device is connected to a media aggregating node outside the local network. The method comprises the media rendering recording device requesting the media aggregating node to retrieve a playlist of available broadcasted/multicasted media content, and receiving the playlist. Then, the media rendering recording device forwards the playlist as a recording playlist to a browsing media controlling device, the list comprising associations to the media, receives a play-command from the media controlling node, the command comprising an association indicating a recording of user-selected media, and retrieves and records a user-selected media stream.

According to a second aspect, a method is provided for a media controlling device of a local network of initiating a recording of broadcasted/multicasted media on a media rendering recording device of the local network. The media rendering recording device is connected to a media aggregating node outside the local network. The method comprises the media controlling device browsing the media rendering recording device in order to receive and display a recording playlist obtained from the media aggregating node. The playlist comprises available live broadcasted/multicasted media, with associations to the media. The method further comprises the media controlling device receiving a play-input indicating a user-selected media from the recording playlist, and sending a play-command comprising an association indicating a recording of the user-selected media to the media rendering recording device.

According to a third aspect, a media rendering recording device is provided that is connectable to a local network and to a media aggregating node outside the local network. The media rendering recording device is arranged to record broadcasted/multicasted media content, the recording being initiated by a media controlling device of the local network. The media rendering recording device comprises a communication unit and processing circuits, and is configured to request the media aggregating node to retrieve a media playlist. It is further configured to receive the playlist, and forward the playlist as a recording playlist to a browsing media controlling device, the playlist comprising associations to the media. Further, the media rendering recording device is configured to thereafter receive a play-command from the media controlling node, the command comprising an association indicating a recording of user-selected media, and to retrieve and record the media.

According to a fourth aspect, a media controlling device is provided that is connectable to a local network and arranged to initiate a recording of broadcasted/multicasted media on a media rendering recording device of the local network. The media rendering recording device is further connected to a media aggregating node outside the local network. The media controlling device is provided with processing circuits, and comprises a browser for browsing the media rendering recording device in order to receive a list of broadcasted/multicasted media available for recording, a display for displaying a recording playlist, the playlist comprising associations to the media, a user input unit for receiving a play-input indicating a user-selected media from a recording playlist, and a communication unit for sending a play-command to the media rendering recording device, the command comprising an association indicating a recording of a user-selected media.

According to an exemplary embodiment, the local network is a DLNA-network, and the devices of the DLNA-network are communicating by the UPnP.

An advantage with the embodiments is to enable a recording of user-selected live broadcasted media within a local network. An advantage with the embodiments in which the local network is a DLNA network is that a conventional DLNA/UPnP-communication can be used between the devices.

### BRIEF DESCRIPTION OF THE DRAWINGS

Exemplary embodiments of the invention will now be described in more detail, and with reference to the accompanying drawings, in which:
- Figure 1 schematically illustrates an exemplary DLNA network connected to a media aggregating node of an external network, via a gateway;
- Figure 2 is an exemplary signalling diagram illustrating recording of broadcasted media content on a media rendering recording device;
- Figure 3 is an exemplary signalling diagram illustrating a play-out of recorded media;
- Figure 4 is a flow diagram schematically illustrating a media rendering recording device that is recording broadcasted media content;
- Figure 5 is a flow diagram schematically illustrating a media rendering recording device playing-out recorded media content;
- Figure 6a is a flow diagram schematically illustrating a media controlling device initiating a recording of broadcasted media content;
- Figure 6b is a flow diagram schematically illustrating a media controlling device initiating a play-out of recorded media;
- Figures 7a-c schematically illustrate exemplary media rendering recording devices; and
- Figure 8 schematically illustrates an exemplary media controlling device.

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

In the following, the term **local network** may indicate e.g. a DLNA-network, but the embodiments are not limited thereto. The term **external network** indicates a network outside the local network, e.g. the Internet, but the embodiments are not limited thereto.

A concept of the embodiments described hereinafter provides a media rendering recording device for a local network, e.g. for a DLNA network, that is capable of recording live broadcasted or multicasted media content, the recording initiated by a media controlling device, e.g. a DMC for a DLNA network.

Another type of device, that is not a standardized DLNA device, is hereinafter denoted an rDMS (remote Digital Media Storage/Server), which basically corresponds to a remotely (or externally) connectable DMS. An rDMS is a device that is connectable to an external network, and the rDMS may be comprised in a gateway of the local network, or connected to the gateway. The rDMS is able to make external media content available to a DMP or a DMC of the local network by fetching a playlist of available external media from the media aggregating node, and forward to a browsing DMP or DMC, with an association, e.g. a link, to the media.

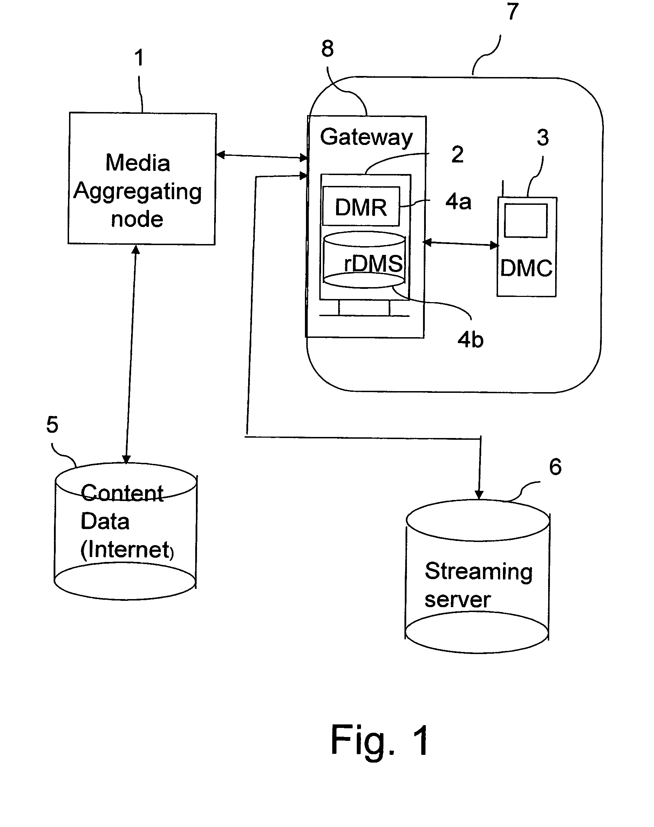

Figure 1 illustrates an exemplary local network 7, e.g. a DLNA network, comprising a media rendering recording device 2 included in a gateway 8. The media rendering recording device according to the illustrated embodiment comprises a remote-media storing device 4b, e.g. an above-mentioned rDMS, and a media rendering device 4a, e.g. a DMR according to the DLNA. A media aggregating node 1 of en external network, e.g. the Internet, is connected to the local network via the gateway, and the local network further comprises a media controlling device 3, e.g. a DMC according to the DLNA, as illustrated in the figure. The media controlling device 3 is capable of browsing the media rendering recording device 2 to obtain a media playlist, and send an association to a specific user-selected media, e.g. a specific URL obtained from the playlist, to said media rendering recording device itself, wherein the media rendering recording device is able to connect to the specific URL for retrieving the media stream from a streaming server 6, and record the media stream. The media rendering recording device obtains the media playlist from the media aggregating node, and forwards to a user on the browsing media controlling device e.g. as a recording playlist, typically in the form of tree structure. The media aggregating node 1 obtains available media titles for the playlist, as well as the URLs to the respective media file, from one or more media content data servers 5 associated with external media providers.

Thus, according to exemplary embodiments of initiating a recording live broadcasted media content, a media controlling device 3 of a local network 7, e.g. a DMC in a DLNA network, as illustrated in figure 1, initiates a recording of broadcasted media content on a media rendering recording device 2 of the local network. The media controlling device browses the media rendering recording device 2 in order to receive a playlist of available external media that will be broadcasted, and the media rendering recording device retrieves a media playlist from the media aggregating node and forwards to the media controlling device. The media playlist is displayed on the media controlling device as a recording playlist, and when the media rendering recording device receives a play-command comprising an association indicating a recording of user-selected media from the media controlling device, it will retrieve and record the media stream from a streaming server. The media stream will be retrieved from the streaming server at the time of the broadcasting, which may be immediately after receiving the command, or after time interval, e.g. after a few hours or a few days.

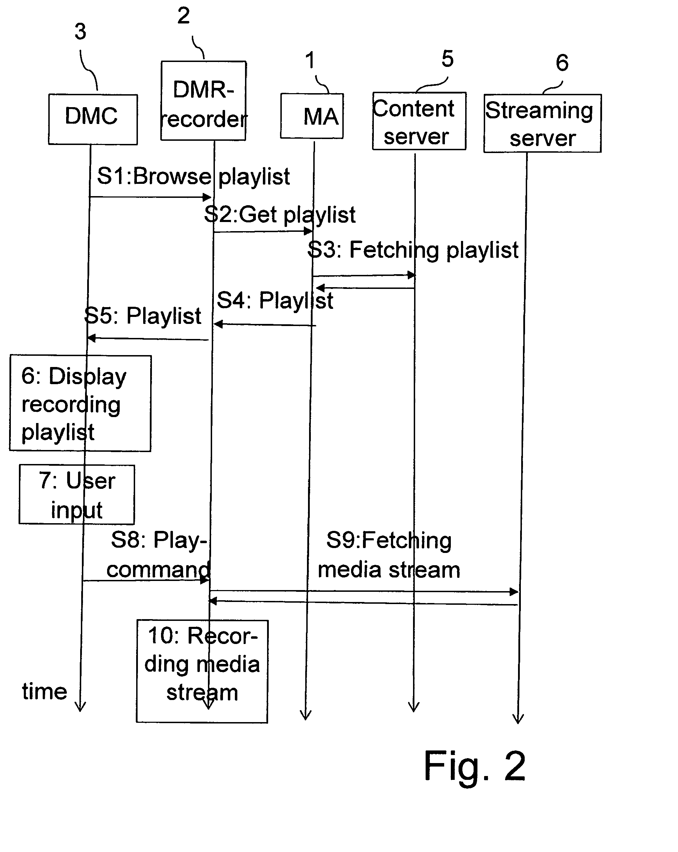

Figure 2 is a signalling diagram illustrating an exemplary recording of broadcasted media content on a media rendering recording device of a local network, initiated by a media controlling device of the local network. According to the illustrated embodiment, the local network is a DLNA network. In the figure, a DMC 3 of the DLNA network browses a DMR-recorder 2 of the DLNA network in order to receive a playlist of available broadcasted media, in signal S1. The DMR-recorder sends a request to a connected MA (media aggregating node) 2 for a playlist, and the MA fetches data from one or more media content data servers 5 for creating a playlist, in signal S3. Next, the MA forwards a playlist to the DMR-recorder, in signal S4, and the DMR-recorder forwards it to the browsing DMC for display as a recording playlist, in signal S5. In step 6, the DMC displays the playlist to the user as a recording playlist, and receives a play-input from the user indicating a selected media from the recording playlist, in step 7. Next, the DMC sends a play-command to the DMR-recorder, in signal S8, the command comprising an association, e.g. an URL or any other suitable reference information, indicating a recording of the media. At the starting time of the broadcasting of the user-selected media, the DMR-recorder retrieves the media stream, in signal S9, from a streaming server 6, and records the media stream, in step 10.

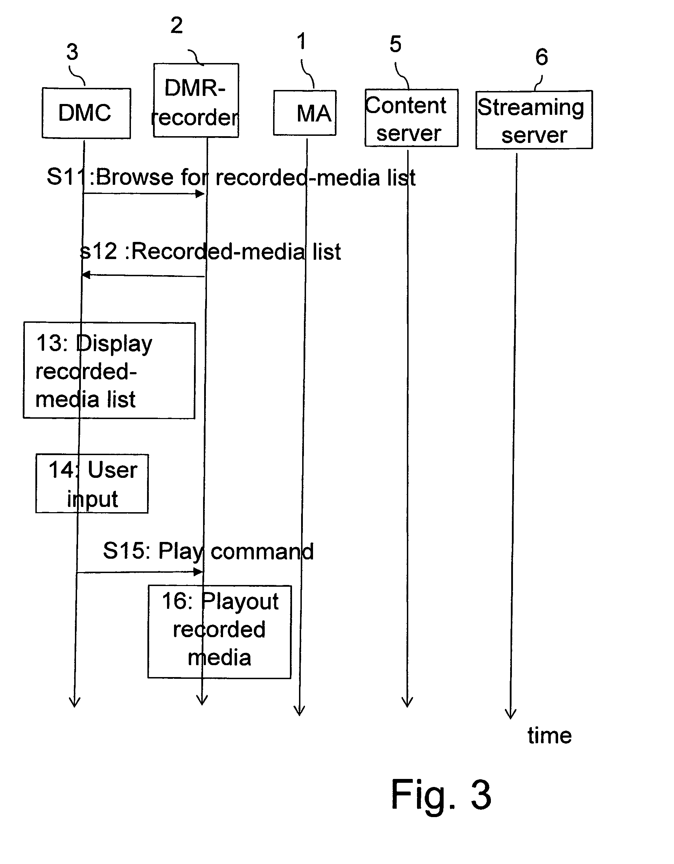

According to further embodiments, a media controlling device initiates a play-out of recorded broadcasted media content on the media rendering recording device of the local network. Figure 3 is a signalling diagram schematically illustrating an exemplary play-out of recorded media in a DLNA network. A DMC 3 browses the DMR-recorder 2 in order to receive a list of recorded media content stored in the DMR-recorder, in signal S11. In signal S12, the DMC receives a recorded-media list, which is displayed to the user in step 13, the list comprising associations to the recorded media, e.g. links pointing to the DMR-recorder. Next, the DMC receives a play-input of selected recorded media to play-out, in step 14, and sends a play-command comprising an association to the user-selected recorded media to the DMR-recorder, in signal S15. In step 16, DMR-recorder plays-out the user-selected recorded media.

Thus, in the exemplary embodiments illustrated in the signalling diagrams 2 and 3, the media rendering recording device 2 acts as a conventional DMS towards the browsing DMC 3, enabling the use of conventional DLNA/UPnP-commands.

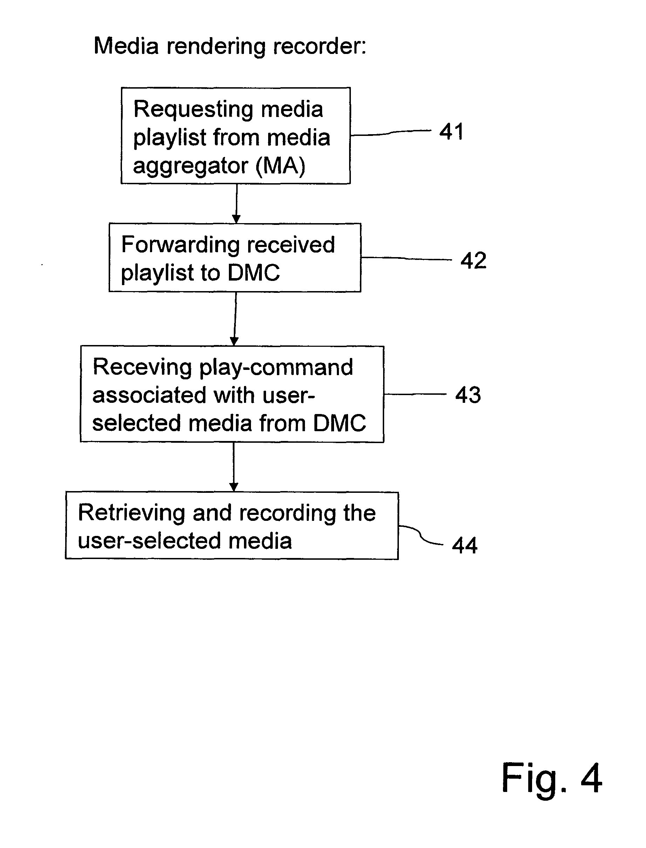

Figure 4 is a flow diagram illustrating an exemplary embodiment for a media rendering recording device of a local network, e.g. a DMR-recorder a DLNA network, of recording live broadcasted or multicasted media content, initiated by a media controlling device of the local network, e.g. a DMC. In step 41, the media rendering recording device requests a playlist of available media content from a media aggregating node, and receives and forwards the playlist, in step 42, to the browsing DMC, the playlist comprising associations, e.g. URLs, to the media. In step 43, the media rendering recording device receives a play-command comprising an association indicating a recording of user-selected broadcasted media from the media controlling device, and retrieves and records the media, e.g. from a streaming server, in step 44. The media is retrieved at the time of the broadcasting, which may take place immediately, or after a time interval.

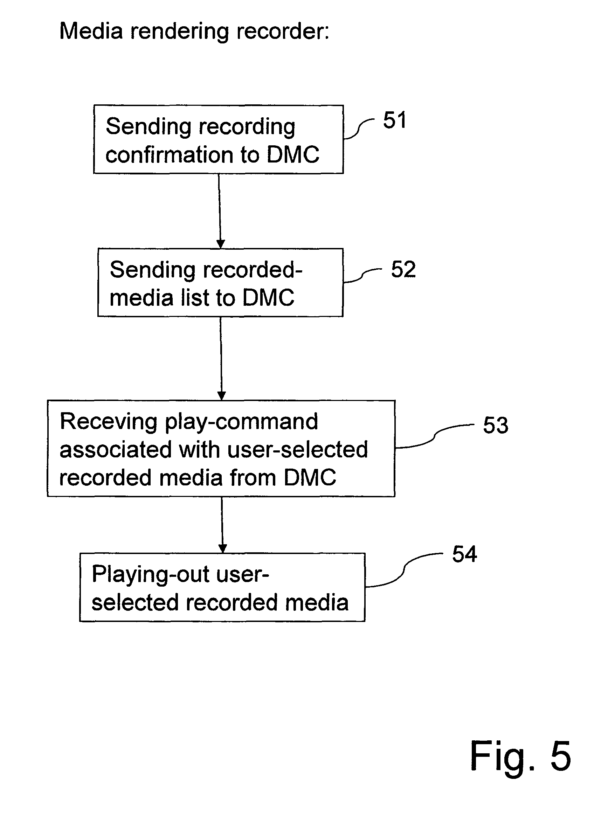

Figure 5 is a flow diagram illustrating a further exemplary embodiment for the media rendering recording device of playing-out recorded media. In step 51, the media rendering recording device sends a confirmation of the recording to the browsing media controlling device, e.g. a DMC. Eventually, when a user wishes to watch a recorded media, it sends a list of recorded media to a browsing DMC, the list comprising associations to the recorded media, and receives a play-command comprising an association indicating a play-out of user-selected recorded media from the DMC, in step 53. Next, in step 54, the media rendering recording device plays-out the selected recorded media.

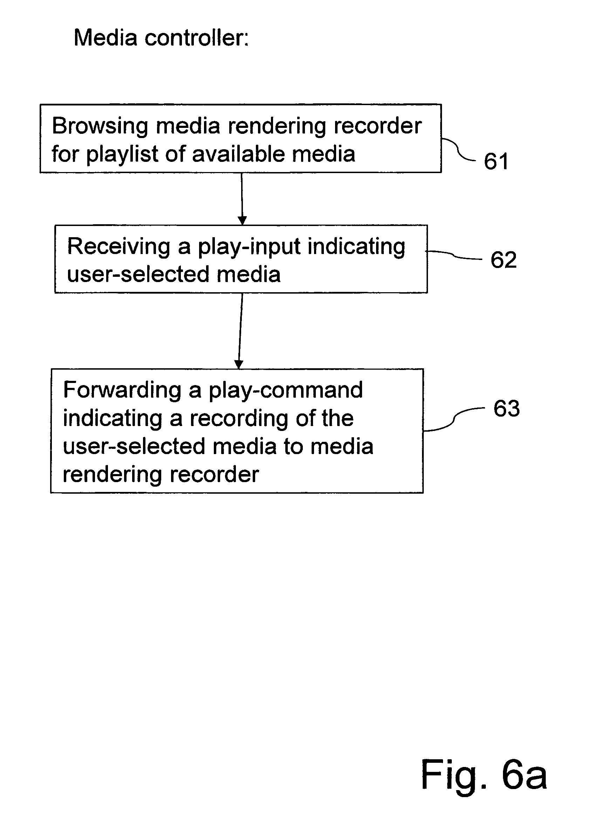

Figure 6a is a flow diagram illustrating an exemplary embodiment for a media controlling device of a local network, e.g. a DMC of a DLNA-network, of initiating a recording of live broadcasted media on a media rendering recording device of the local network. In step 61, the DMC browses the media rendering recording device, in order to receive a recording playlist of available broadcasted media, the playlist comprising associations to the media. In step 62, the DMC receives a play-input from a user indicating a selected media to record, and forwards a play-command comprising an association indication a recording of user-selected broadcasted media to the media rendering recording device, in step 63.

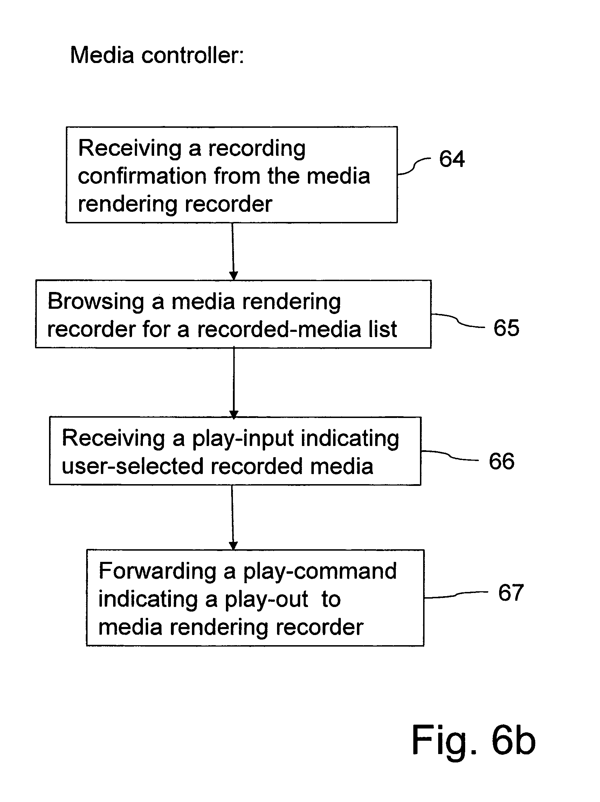

Figure 6b is a flow diagram illustrating further exemplary steps of initiating a playing-out of recorded media, after receiving and displaying a confirmation of the recording from the media rendering recording device, in step 64. Eventually, when the DMC-user wishes to watch recorded media, the DMC browses the media rendering recorder in order to receive and display a recorded-media list comprising associations to the media, e.g. links pointing to the media rendering recording device, in step 65. Next, the DMC receives a play-input from the user indication a selected media to play-out, in step 66, and forwards a play-command comprising an association indicating a play-out of the user-selected media to the media rendering recording device, in step 67.

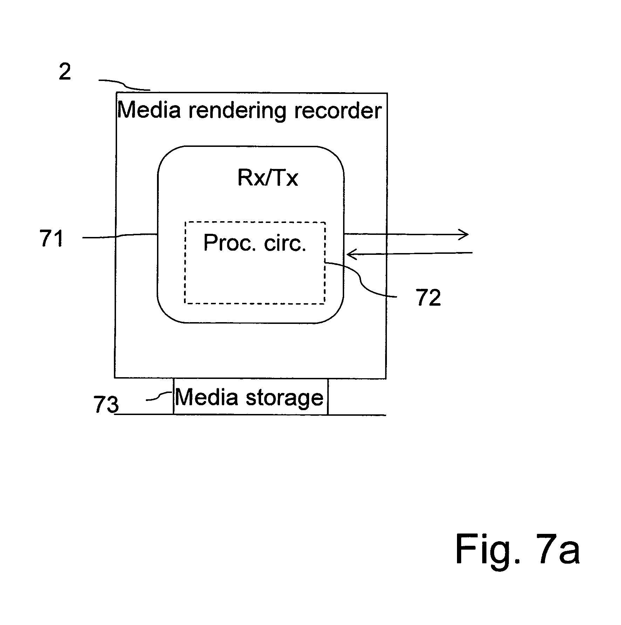

Figure 7a schematically illustrates a media rendering recording device 2 that is connectable to a local network, e.g. to a DLNA-network, according to an exemplary embodiment of the invention. The media rendering recording device is provided with a suitable communication unit 71 comprising transmitters and receivers, in order to communicate with the other devices of the local network, as well as with the gateway of the local network, and processing circuits 72 for controlling e.g. the communication. The media rendering recorder also comprises a storage unit 73 for recorded media.

By means of the communication unit 71 and the processing unit 72, and by other appropriate hardware, and the software of the processing units, the media rendering recorder is configured to request the media aggregating node to retrieve a media playlist, to receive the requested playlist, and to forward the playlist as a recording playlist to a browsing media controlling device, the list comprising associations to the media. Further, the media rendering recorder is configured to receive a play-command comprising an association indicating a recording of user-selected broadcasted media from the media controlling device, and to retrieve and record the media, typically from a streaming server. The recording is performed at the time of the live broadcasting of the media, which may take place immediately after receiving the command, or after a time interval, which may be e.g. a few hours or few days.

According to a further exemplary embodiment, the media rendering recorder is also configured to send a confirmation of the recording to the browsing media controlling device. It may also be configured to send a recorded-media list to a browsing media controlling device, the list comprising associations to the media, e.g. links pointing to the recorded media, and further to receive a play-command comprising an association indicating a play-out of a user-selected recorded media from the media controlling device, and to play-out the selected media.

As stated above, in an embodiment when the local network is a DLNA network, the media rendering recording device will act as a conventional DMS and DMR towards other DLNA-devices, e.g. towards a browsing DMC. Thereby, a conventional DLNA/UPnP-communication may be used, requiring no additional commands between the devices.

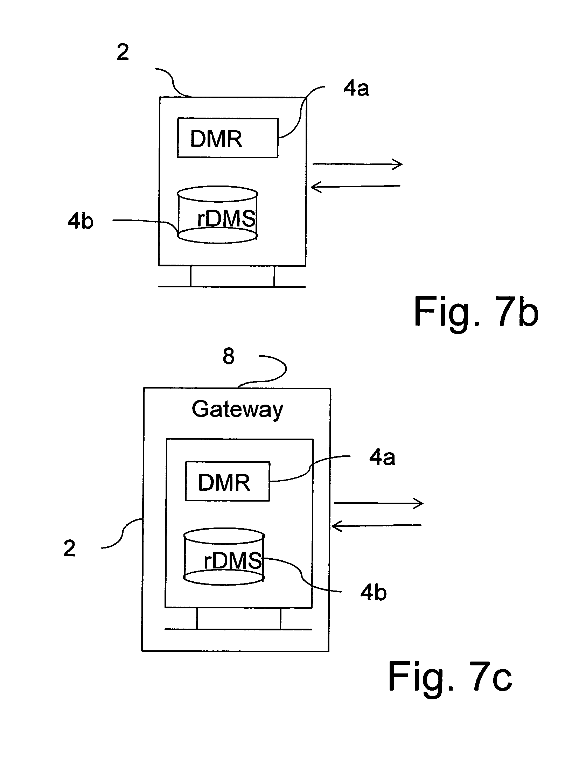

According to an exemplary embodiment, a DLNA-compliant media rendering recording device comprises functionality corresponding to a combined DMR (Digital Media Renderer) and an rDMS,(remote Digital Media Server/Storage), i.e. a remotely (externally) connectable DMS, as illustrated in figure 7b, showing a media rendering recording device 2 comprising a DMR 4a and an rDMS 4b.

According to a further exemplary embodiment, the media rendering recording device is comprised in a gateway of the DLNA network, as illustrated in figure 7c, showing a gateway 8, comprising a media rendering recording device 2, the media rendering recording device comprising a DMR 4a and an rDMS 4b.

However, according to another exemplary embodiment, the media rendering recording device is not included in a gateway, but is connectable to the gateway.

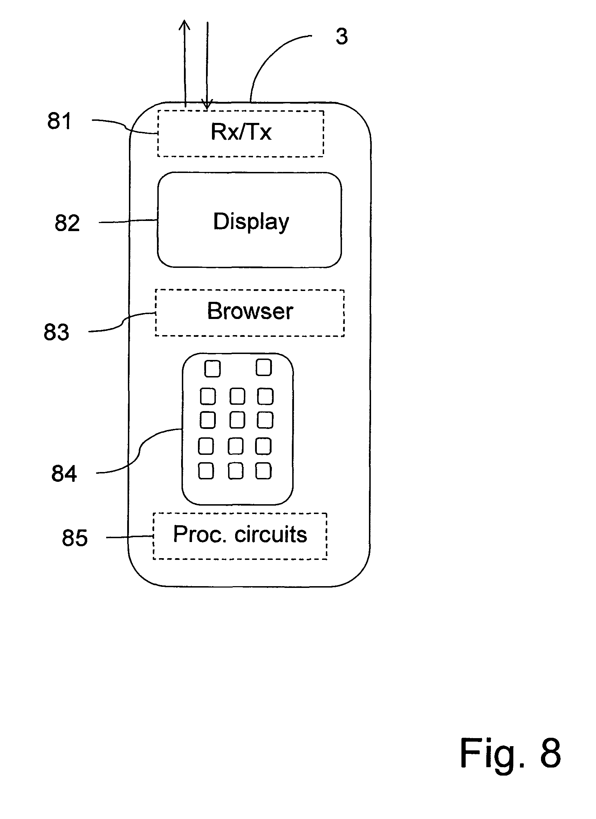

Figure 8 illustrates schematically an exemplary media controlling device 3, connectable to a local network, according to embodiments of this invention, e.g. a DMC connectable to a DLNA network. The DMC is provided with a communication unit 81 comprising a transmitter and a receiver, for communication with the other devices of the local network, and with the gateway of the local network. The DMC further comprises a browser 83 for browsing e.g. a media rendering recording device in order to receive a playlists of available broadcasted media, or recorded media. Further, the DMC is provided with a display 82 for presenting information to a user, e.g. a recording playlist over available media for recording, or a recorded-media list, the lists comprising associations to the media. The DMC is also provided with appropriate user input means 84 for selecting media on a displayed list in a play-input, e.g. from a recording playlist or a recorded-media list to record or play-out. Said communication unit 81 is configured to send a play-command to the media rendering recording device, the command comprising an association indicating e.g. a recording or a play-out of user-selected media.

The DMC is also provided with suitable processing circuits 85 arranged to control the hardware of the DMC for recording user-selected broadcasted or multicasted media on a media rendering recording device of the local network. Thus, by means of appropriate hardware, and the software stored in the processing circuits, the DMC is configured to browse the media rendering recording device for receiving a playlist of available broadcasted media, to receive a play-input indicating a user-selected media, and to forward a play-command comprising an association indicating a recording of the media to the media rendering recording device.

According to a further exemplary embodiment, the media controlling device (e.g. a DMC) is configured to receive and display a confirmation of recorded media, the confirmation received from the media rendering recording device. Further, the media controlling device may be configured to initiate a play-out of recorded media, by browsing the media rendering recording in order to receive and display a recorded-media list, receiving a play-input of user-selected media, and forwarding as a play-command to the media rendering recording device, the command comprising an association indicating a play-out of the media. A DMC may be implemented e.g. as a PDA (Personal Digital Assistant) or a mobile phone.

It should be noted that the media rendering recording device, as illustrated in the figures 7a, 7b and 7c, and the media controlling device, as illustrated in figure 8, may be implemented by physical or logical entities using software functioning in conjunction with a programmed microprocessor or general purpose computer, and/or using an application specific integrated circuit (ASIC).

Further, the above mentioned and described embodiments are only given as examples and should not be limiting to the present invention. Other solutions, uses, objectives, and functions within the scope of the invention as claimed in the accompanying patent claims should be apparent for the person skilled in the art.

### ABBREVIATIONS

- DLNA: Digital Living Network Alliance
- DMC: Digital Media Controller
- DMP: Digital Media Player
- DMS: Digital Media Storage/Server
- rDMS: Remote-Media Storage/Server
- DMR: Digital Media Renderer
- UPnP: Universal Plug and Play
- MA: Media aggregating node

## Claims

1. A method for a media rendering recording device (2) in a local network (7) of recording a broadcasted/multicasted media content, the recording being initiated by a media controlling device (3) of the local network, the media rendering recording device being connected to a media aggregating node (1) located outside the local network, the method comprising:
- requesting (41) from within the local network the media aggregating node to retrieve a playlist of available media content to be broadcasted/multicasted;
- receiving (42) the playlist, and forwarding the playlist as a recording playlist to a browsing media controlling device, the playlist comprising associations to the media;
- receiving (43) a play-command from the media controlling device, the command comprising an association indicating a recording of user selected media;
- retrieving (44) and recording a user-selected media stream from a streaming server (6) via a gateway (8) to the local network at the time of broadcasting.

2. A method according to claim 1, wherein the media stream is retrieved and recorded at the time of the broadcasting, which takes place a pre-defined time interval after receiving the recording-command.

3. A method according to any of the preceding claims, further comprising:
- sending (51) a confirmation of the recording to the browsing media controlling device.

4. A method according to any of the preceding claims, wherein a play-out of recorded media comprises:
- sending (52) a recorded-media list to a browsing media controlling device, the list comprising associations to the recorded media;
- receiving (53) a play-command from the media controlling device, the command comprising an association to user-selected recorded media, and
- playing-out (54) the user-selected recorded media.

5. A method for a media controlling device (3) of a local network (7) of initiating a recording of broadcasted/multicasted media on a media rendering recording device (2) of the local network (7), the media rendering recording device being connected to a media aggregating node (1) located outside the local network, the method comprising:
- browsing (61) the media rendering recording device, in order to receive and display a recording playlist comprising associations to available media to be broadcasted/multicasted, the playlist obtained from the media aggregating node;
- receiving (62) a play-input indicating a user-selected media from the recording playlist;
- forwarding (63) a play-command to the media rendering recording device, the play-command comprising an association indicating a recording of user-selected media from the recording playlist, wherein a user-selected media stream is retrieved and recorded by the media rendering recording device (2) from a streaming server (6) via a gateway (8) to the local network at the time of broadcasting.

6. A method according to claim 5, further comprising receiving and displaying (63) a confirmation of the recording.

7. A method according to claim 5 or 6, wherein a play-out of recorded media further comprises:
- browsing (65) the media rendering recording device, in order to receive and display a recorded-media list, the list comprising associations to the recorded media;
- receiving (66) a play-input indicating a user-selected media on the recorded-media list;
- forwarding (67) a play-command to the media rendering recording device, the play-command comprising an association to a user-selected recorded media from the recorded-media list.

8. A media rendering recording device (2), connectable to a local network (7) and to a media aggregating node (1) located outside the local network, the media rendering recording device being arranged to record broadcasted/multicasted media content and the recording being initiated by a media controlling device (3) of the local network, the media rendering recording device comprising a communication unit (71) and processing circuits (72), and being configured to:
- request from within the local network the media aggregating node to retrieve a media playlist;
- receive the playlist, and forward the playlist as a recording playlist to a browsing media controlling device, the playlist comprising associations to the media to be broadcasted/multicasted;
- receive a play-command from the media controlling device, the command comprising an association indicating a recording of user selected media;
- retrieve and record a media stream from a streaming server (6) via a gateway (8) to the local network at the time of broadcasting.

9. A media rendering recording device according to claim 8, comprising a media rendering device (4a) and a remote-media storage device (4b).

10. A media rendering recording device according to claim 8 or 9, comprising storage unit (73) for storing recorded media.

11. A media rendering recording device, according to any of the claims 8 - 10, comprised in a gateway (8) of the local network.

12. A media rendering recording device, according to any of the claims 8 - 10, connectable to a gateway (8) of the local network.

13. A media rendering recording device (2) according to any of the claims 8 - 12, further configured to:
- send a confirmation of the recording to the browsing media controlling device (3).

14. A media controlling device (3) connectable to a local network and arranged to initiate a recording of broadcasted/multicasted media on a media rendering recording device (2) of the local network (7), the media rendering recording device being connected to a media aggregating node located (1) outside the local network, and the media controlling device being provided with processing circuits (85), and further comprising:
- a browser (83) for browsing the media rendering recording device in order to receive a recording playlist of available live media to be broadcasted/multicasted;
- a display (82) for displaying a recording playlist, the playlist comprising associations to the media to be broadcasted/multicasted;
- user input unit (84) for receiving a play-input indicating a user-selected media from the recording playlist;
- a communication unit (81) for sending a play-command to the media rendering recording device, the play-command comprising an association indicating a recording of a user-selected media, wherein a user-selected media stream is retrieved and recorded by the media rendering recording device (2) from a streaming server (6) via a gateway (8) to the local network at the time of broadcasting.

15. A media controlling device, according to claim 14, further arranged to receive and display a confirmation of recorded media from the media rendering recording device.

## Patentansprüche

1. Verfahren für eine Medienwiedergabe-/- aufzeichnungsvorrichtung (2) in einem lokalen Netz (7) zum Aufzeichnen eines per Broadcast/Multicast gesendeten Medieninhalts, wobei das Aufzeichnen durch eine Mediensteuervorrichtung (3) des lokalen Netzes ausgelöst wird, die Medienwiedergabe-/- aufzeichnungsvorrichtung mit einem Medienaggregationsknoten (1) verbunden ist, der sich außerhalb des lokalen Netzes befindet, und das Verfahren umfasst:
- Auffordern (41) von innerhalb des lokalen Netzes des Medienaggregationsknotens, eine Wiedergabeliste von verfügbarem Medieninhalt abzurufen, der per Broadcast/Multicast gesendet werden soll;
- Empfangen (42) der Wiedergabeliste und Weiterleiten der Wiedergabeliste als eine Aufzeichnungswiedergabeliste an eine Navigations-Mediensteuervorrichtung, wobei die Wiedergabeliste Assoziationen mit den Medien umfasst;
- Empfangen (43) eines Wiedergabebefehls von der Mediensteuervorrichtung, wobei der Befehl eine Assoziation umfasst, die ein Aufzeichnen von Medien anzeigt, die von einem Benutzer ausgewählt sind;
- Abrufen (44) und Aufzeichnen eines von einem Benutzer ausgewählten Medienstroms von einem Streaming-Server (6) über ein Gateway (8) in ein lokales Netz zum Zeitpunkt des Sendens per Broadcast.

2. Verfahren nach Anspruch 1, wobei der Medienstrom zum Zeitpunkt des Sendens per Broadcast, das ein vordefiniertes Zeitintervall nach dem Empfangen des Aufzeichnungsbefehls stattfindet, abgerufen und aufgezeichnet wird.

3. Verfahren nach einem der vorhergehenden Ansprüche, ferner umfassend:
- Senden (51) einer Bestätigung des Aufzeichnens an die Navigations-Mediensteuervorrichtung.

4. Verfahren nach einem der vorhergehenden Ansprüche, wobei ein Wiedergeben von aufgezeichneten Medien umfasst:
- Senden (52) einer Liste von aufgezeichneten Medien an eine Navigations-Mediensteuervorrichtung, wobei die Liste Assoziationen mit den aufgezeichneten Medien umfasst;
- Empfangen (53) eines Wiedergabebefehls von der Mediensteuervorrichtung, wobei der Befehl eine Assoziation mit aufgezeichneten Medien anzeigt, die von einem Benutzer ausgewählt sind; und
- Wiedergeben (54) der von einem Benutzer ausgewählten aufgezeichneten Medien.

5. Verfahren für eine Mediensteuervorrichtung (3) eines lokalen Netzes (7) zum Auslösen eines Aufzeichnens von per Broadcast/Multicast gesendeten Medien auf einer Medienwiedergabe-/-aufzeichnungsvorrichtung (2) des lokalen Netzes (7), wobei die Medienwiedergabe-/- aufzeichnungsvorrichtung mit einem Medienaggregationsknoten (1) verbunden ist, der sich außerhalb des lokalen Netzes befindet, und das Verfahren umfasst:
- Browsen (61) der Medienwiedergabe-/aufzeichnungsvorrichtung, um eine Aufzeichnungswiedergabeliste, die Assoziationen mit verfügbaren Medien umfasst, die per Broadcast/Multicast gesendet werden sollen, zu empfangen und anzuzeigen, wobei die Wiedergabeliste vom Medienaggregationsknoten erhalten wird;
- Empfangen (62) einer Wiedergabe-Eingabe, die ein von einem Benutzer ausgewähltes Medium aus der Aufzeichnungswiedergabeliste anzeigt;
- Weiterleiten (63) eines Wiedergabebefehls an die Medienwiedergabe-/-aufzeichnungsvorrichtung, wobei der Wiedergabebefehl eine Assoziation umfasst, die ein Aufzeichnen von Medien anzeigt, die von einem Benutzer aus der Aufzeichnungswiedergabeliste ausgewählt sind, wobei ein von einem Benutzer ausgewählter Medienstrom zum Zeitpunkt des Sendens per Broadcast durch die Medienwiedergabe-/- aufzeichnungsvorrichtung (2) von einem Streaming-Server (6) über ein Gateway (8) abgerufen und in das lokale Netz aufzeichnet wird.

6. Verfahren nach Anspruch 5, ferner umfassend ein Empfangen und Anzeigen (63) einer Bestätigung des Aufzeichnens.

7. Verfahren nach Anspruch 5 oder 6, wobei ein Wiedergeben von aufgezeichneten Medien ferner umfasst:
- Browsen (65) der Medienwiedergabe-/- aufzeichnungsvorrichtung, um eine Liste von aufgezeichneten Medien zu empfangen und anzuzeigen, wobei die Liste Assoziationen mit den aufgezeichneten Medien umfasst;
- Empfangen (66) einer Wiedergabe-Eingabe, die ein von einem Benutzer ausgewähltes Medium auf der Aufzeichnungswiedergabeliste anzeigt;
- Weiterleiten (67) eines Wiedergabebefehls an die Medienwiedergabe-/-aufzeichnungsvorrichtung, wobei der Wiedergabebefehl eine Assoziation mit einem von einem Benutzer ausgewählten Medium aus der Liste mit aufgezeichneten Medien umfasst.

8. Medienwiedergabe-/-aufzeichnungsvorrichtung (2), die mit einem lokalen Netz (7) und mit einem Medienaggregationsknoten (1), der sich außerhalb des lokalen Netzes befindet, verbunden werden kann, wobei die Medienwiedergabe-/-aufzeichnungsvorrichtung so ausgelegt ist, dass sie per Broadcast/Multicast gesendeten Medieninhalt aufzeichnet, und das Aufzeichnen durch eine Mediensteuervorrichtung (3) des lokalen Netzes ausgelöst wird, die Medienwiedergabe-/- aufzeichnungsvorrichtung eine Kommunikationseinheit (71) und Verarbeitungsschaltungen (72) umfasst und konfiguriert ist zum:
- Auffordern von innerhalb des lokalen Netzes des Medienaggregationsknotens, eine Medienwiedergabeliste abzurufen;
- Empfangen der Wiedergabeliste und Weiterleiten der Wiedergabeliste als eine Aufzeichnungswiedergabeliste an eine Navigations-Mediensteuervorrichtung, wobei die Wiedergabeliste Assoziationen mit den Medien umfasst, die per Broadcast/Multicast gesendet werden sollen;
- Empfangen eines Wiedergabebefehls von der Mediensteuervorrichtung, wobei der Befehl eine Assoziation umfasst, die ein Aufzeichnen von Medien anzeigt, die von einem Benutzer ausgewählt sind;
- Abrufen und Aufzeichnen eines Medienstroms von einem Streaming-Server (6) über ein Gateway (8) in ein lokales Netz zum Zeitpunkt des Sendens per Broadcast.

9. Medienwiedergabe-/-aufzeichnungsvorrichtung nach Anspruch 8, umfassend eine Medienwiedergabevorrichtung (4a) und eine Fernmedienspeichervorrichtung (4b).

10. Medienwiedergabe-/-aufzeichnungsvorrichtung nach Anspruch 8 oder 9, umfassend eine Speichereinheit (73) zum Speichern von aufgezeichneten Medien.

11. Medienwiedergabe-/-aufzeichnungsvorrichtung nach einem der Ansprüche 8 - 10, enthalten in einem Gateway (8) des lokalen Netzes.

12. Medienwiedergabe-/-aufzeichnungsvorrichtung nach einem der Ansprüche 8 - 10, verbindbar mit einem Gateway (8) des lokalen Netzes.

13. Medienwiedergabe-/-aufzeichnungsvorrichtung nach (2) nach einem der Ansprüche 8 - 12, ferner konfiguriert zum:
- Senden einer Bestätigung des Aufzeichnens an die Navigations-Mediensteuervorrichtung (3).

14. Mediensteuervorrichtung (3), die mit einem lokalen Netz verbunden werden kann und so ausgelegt ist, dass sie ein Aufzeichnen von per Broadcast/Multicast gesendeten Medien auf einer Medienwiedergabe-/- aufzeichnungsvorrichtung (2) des lokalen Netzes (7) auslöst, wobei die Medienwiedergabe-/- aufzeichnungsvorrichtung mit einem Medienaggregationsknoten (1) verbunden ist, der sich außerhalb des lokalen Netzes befindet, und die Mediensteuervorrichtung mit Verarbeitungsschaltungen (85) versehen ist und ferner umfasst:
- einen Browser (83) zum Browsen der Medienwiedergabe-/-aufzeichnungsvorrichtung, um eine Aufzeichnungswiedergabeliste von verfügbaren Live-Medien zu empfangen, die per Broadcast/Multicast gesendet werden sollen;
- eine Anzeige (82) zum Anzeigen einer Aufzeichnungswiedergabeliste, wobei die Wiedergabeliste Assoziationen mit den Medien umfasst, die per Broadcast/Multicast gesendet werden sollen;
- eine Benutzereingabeeinheit (84) zum Empfangen einer Wiedergabe-Eingabe, die ein von einem Benutzer ausgewähltes Medium aus der Aufzeichnungswiedergabeliste anzeigt;
- eine Kommunikationseinheit (81) zum Senden eines Wiedergabebefehls an die Medienwiedergabe-/- aufzeichnungsvorrichtung, wobei der Wiedergabebefehl eine Assoziation umfasst, die ein Aufzeichnen eines von einem Benutzer ausgewählten Mediums anzeigt, wobei ein von einem Benutzer ausgewählter Medienstrom zum Zeitpunkt des Sendens per Broadcast durch die Medienwiedergabe-/-aufzeichnungsvorrichtung (2) von einem Streaming-Server (6) über ein Gateway (8) abgerufen und in das lokale Netz aufzeichnet wird.

15. Mediensteuervorrichtung nach Anspruch 14, die ferner so ausgelegt ist, dass sie eine Bestätigung von aufgezeichneten Medien von der Medienwiedergabe-/- aufzeichnungsvorrichtung empfängt und anzeigt.

## Revendications

1. Procédé pour un dispositif d'enregistrement de rendu média (2) dans un réseau local (7) d'enregistrement d'un contenu média diffusé/multidiffusé, l'enregistrement étant amorcé par un dispositif de commande média (3) du réseau local, le dispositif d'enregistrement de rendu média étant connecté à un noeud d'agrégation média (1) situé à l'extérieur du réseau local, le procédé comprenant de :
- demander (41) dans quel réseau local le noeud d'agrégation média doit extraire une liste de lecture de contenu média disponible à diffuser/multidiffuser ;
- recevoir (42) la liste de lecture, et acheminer la liste de lecture comme une liste de lecture enregistrée vers un dispositif de commande de média navigués, la liste de lecture comprenant des associations aux média ;
- recevoir (43) une commande de lecture provenant du dispositif de commande média, la commande comprenant une association indiquant un enregistrement de média sélectionnés par l'utilisateur ;
- extraire (44) d'un serveur de streaming (6) et enregistrer un flux média sélectionné par l'utilisateur via une passerelle (8) vers le réseau local au moment de la diffusion.

2. Procédé selon la revendication 1, dans lequel le flux média est extrait et enregistré au moment de la diffusion, qui a lieu à un intervalle de temps prédéfini après la réception de la commande d'enregistrement.

3. Procédé selon une quelconque des revendications précédentes, comprenant en outre de :
- envoyer (51) une confirmation de l'enregistrement sur le dispositif de commande de média navigués.

4. Procédé selon une quelconque des revendications précédentes, dans lequel une lecture des média enregistrés comprend de :
- envoyer (52) une liste de média enregistrés à un dispositif de commande de média navigués, la liste comprenant des associations aux média enregistrés ;
- recevoir (53) une commande de lecture provenant du dispositif de commande média, la commande comprenant une association aux média enregistrés sélectionnés par l'utilisateur, et
- lire (54) les média enregistrés sélectionnés par l'utilisateur.

5. Procédé pour un dispositif de commande média (3) d'un réseau local (7) d'amorce d'un enregistrement de média diffusés/multidiffusés sur un dispositif d'enregistrement de rendu média (2) du réseau local (7), le dispositif d'enregistrement de rendu média étant connecté à un noeud d'agrégation média (1) situé à l'extérieur du réseau local, le procédé comprenant de :
- naviguer (61) dans le dispositif d'enregistrement de rendu média, de manière à recevoir et afficher une liste de lecture enregistrée comprenant des associations aux média disponibles à diffuser/multidiffuser, la liste de lecture étant obtenue du noeud d'agrégation média ;
- recevoir (62) une entrée de lecture indiquant un média sélectionné par l'utilisation provenant de la liste de lecture enregistrée ;
- acheminer (63) une commande de lecture vers le dispositif d'enregistrement de rendu média, la commande de lecture comprenant une association indiquant un enregistrement de média sélectionnés par l'utilisateur à partir de la liste de lecture enregistré, dans lequel un flux média sélectionné par l'utilisateur est extrait et enregistré par le dispositif d'enregistrement de rendu média (2) à partir d'un serveur de streaming (6) via une passerelle (8) vers le réseau local au moment de la diffusion.

6. Procédé selon la revendication 5, comprenant en outre de recevoir et afficher (63) une confirmation de l'enregistrement.

7. Procédé selon la revendication 5 ou 6, dans lequel une lecture de média enregistrés comprend en outre de :
- naviguer (65) dans le dispositif d'enregistrement de rendu média, de manière à recevoir et afficher une liste de média enregistrés, la liste comprenant des associations aux média enregistrés ;
- recevoir (66) une entrée de lecture indiquant un média sélectionné par l'utilisateur sur la liste média enregistrée ;
- acheminer (67) une commande de lecture vers le dispositif d'enregistrement de rendu média, la commande de lecture comprenant une association à un média enregistré sélectionné par l'utilisateur à partir de la liste média enregistré.

8. Dispositif d'enregistrement de rendu média (2), connectable à un réseau local (7) et à un noeud d'agrégation média (1) situé à l'extérieur du réseau local, le dispositif d'enregistrement de rendu média étant agencé afin d'enregistrer des contenus média diffusés/multidiffusés et l'enregistrement étant amorcé par un dispositif de commande média (3) du réseau local, le dispositif d'enregistrement de rendu média comprenant une unité de communication (71) et des circuits de traitement (72), et étant configuré afin de :
- demander à l'intérieur du réseau local au noeud d'agrégation média d'extraire une liste de lecture média ;
- recevoir la liste de lecture, et acheminer la liste de lecture comme une liste de lecture enregistrée vers un dispositif de commande de média navigués, la liste de lecture comprenant des associations aux média à diffuser/multidiffuser ;
- recevoir une commande de lecture provenant du dispositif de commande média, la commande comprenant une association indiquant un enregistrement des média sélectionnés par l'utilisateur ;
- extraire et enregistrer un flux média provenant d'un serveur de streaming (6) via une passerelle (8) vers le réseau local au moment de la diffusion.

9. Dispositif d'enregistrement de rendu média selon la revendication 8, comprenant un dispositif de rendu média (4a) et un dispositif de stockage média distant (4b).

10. Dispositif d'enregistrement de rendu média selon la revendication 8 ou 9, comprenant une unité de stockage (73) pour stocker des média enregistrés.

11. Dispositif d'enregistrement de rendu média selon une quelconque des revendications 8 - 10, compris dans une passerelle (8) du réseau local.

12. Dispositif d'enregistrement de rendu média, selon une quelconque des revendications 8 - 10, connectable à une passerelle (8) du réseau local.

13. Dispositif d'enregistrement de rendu média (2) selon une quelconque des revendications 8 - 12, configuré en outre pour :
- envoyer une confirmation de l'enregistrement au dispositif de commande média (3) navigués.

14. Dispositif de commande média (3) connectable à un réseau local et agencé afin d'amorcer un enregistrement de média diffusés/multidiffusés sur un dispositif d'enregistrement de rendu média (2) du réseau local (7), le dispositif d'enregistrement de rendu média étant connecté à un noeud d'agrégation média situé (1) à l'extérieur du réseau local, et le dispositif de commande média étant pourvu de circuits de traitement (85), et comprenant en outre :
- un navigateur (83) pur naviguer dans le dispositif d'enregistrement de rendu média de manière à recevoir une liste de lecture enregistrée de média live disponibles à diffuser/multidiffuser ;
- un écran (82) pour afficher une liste de lecture d'enregistrement, la liste de lecture comprenant des associations au média à diffuser/multidiffuser ;
- une unité d'entrée d'utilisateur (84) pour recevoir une entrée de lecture indiquant un média sélectionné par l'utilisateur depuis la liste de lecture d'enregistrement ;
- une unité de communication (81) pour envoyer une commande de lecture au dispositif d'enregistrement de rendu média, la commande de lecture comprenant une association indiquant un enregistrement d'un média sélectionné par l'utilisateur, dans lequel un flux média sélectionné par l'utilisateur est extrait et enregistré par le dispositif d'enregistrement de rendu média (2) à partir d'un serveur de streaming (6) via une passerelle (8) vers le réseau local au moment de la diffusion.

15. Dispositif de commande média, selon la revendication 14, agencé en outre afin de recevoir et afficher une confirmation de média enregistrés provenant du dispositif d'enregistrement de rendu média.
